# EUROPEAN PATENT APPLICATION

(11) **EP 4 113 539 A1**
(43) Date of publication of application: **04.01.2023**
(21) Application number: 20922024.3
(22) Date of filing: 18.12.2020
(51) Int. Cl.: G21C 17/00, G21D 3/04

(54) **METHOD AND SYSTEM FOR INTELLIGENT MONITORING OF STATE OF NUCLEAR POWER PLANT**

(30) Priority: 27.02.2020 KR 20200024170
(71) Applicant: Korea Hydro & Nuclear Power Co., Ltd, Gyeongju-si, Gyeongsangbuk-do 38120 (KR); M&D Co., Ltd., Seoul 06704 (KR)
(72) Inventor: KIM, Hyuck Jong, Yongin-si, Gyeonggi-do 17025 (KR); JUNG, Kyung Suk, Suwon-si, Gyeonggi-do 16698 (KR); CHOI, Hyun Woo, Suwon-si, Gyeonggi-do 16687 (KR); SIN, Jae Won, Suwon-si, Gyeonggi-do 16317 (KR); KIM, Dae Woong, Sejong 30130 (KR); KIM, Yun Goo, Daejeon 34094 (KR); SEONG, No Kyu, Daejeon 34048 (KR); MIN, Ji Ho, Sejong 30064 (KR)
(74) Representative: Habermann, Hruschka & Schnabel
(86) International application number: PCT/KR2020/018693
(87) International publication number: WO 2021/172723

(57) **Abstract**

In order to provide a method and a system for monitoring a state of a nuclear power plant capable of reducing a state prediction error of a sensor during startup, full power, shut down operation of a nuclear power plant, and of providing an early warning, without an error alarm by remotely and automatically diagnosing the state of a sensor, device, system and power plant, the present invention comprises: a first layer that compares a sensor measurement value and a device measurement value with predicted values so as to detect anomalies of the sensor and the device; a second layer that classifies a type of the sensor and diagnoses the presence or absence of an anomaly of the sensor on the basis of an anomaly value of the sensor provided from the first layer; and a third layer that diagnoses a state of the nuclear power plant on the basis of detection and diagnosis results for the sensor provided from the first and second layers and an anomaly result for the device provided from the first layer.

## Description

### [Technical Field]

The present disclosure relates to a method and system for intelligent monitoring a state of a nuclear power plant, and more particularly, to a method and system for monitoring a state of a nuclear power plant which remotely and automatically diagnoses abnormal symptoms of the nuclear power plant.

### [Background Art]

Recently, artificial intelligence (AI) technology has been applied to nuclear power plants to improve safety and economic efficiency. In the nuclear power plant field, a sensor reliability improvement technology, which predicts the state of a sensor and compares it with a measured value to remotely monitor failure or drift of the sensor, is being developed. In particular, in order to further improve the safety and economic efficiency of nuclear power plants, the development of technology to build a state-based maintenance system by applying AI technology to the state prediction of devices is being actively conducted at home and abroad. Further, a computing system for supporting state monitoring has also been developed and utilized.

In addition, technology development that monitors the state of devices and systems with sensor remote monitoring technology and monitors the soundness of the entire nuclear power plant is also actively underway at home and abroad. Accordingly, in the general control room of domestic nuclear power-related organizations and companies, which integrates and monitors the state of domestic nuclear power plants, an early warning system for monitoring the state of a nuclear power plant by calculating the soundness of the nuclear power plant as a quantitative indicator based on the difference between a prediction value and a measured value of a sensor has been developed and is being operated.

However, the device state prediction system and soundness monitoring system of domestic and foreign nuclear power plants mainly use a method in which the accuracy of state prediction is lowered when there is no empirical data in the estimation of sensor prediction values. Therefore, compared to the case of full power operation, transient phenomena due to output increase/decrease occur more frequently.

Accordingly, there is a need for research and development of technologies that can reduce the prediction error of the state of sensors and devices during startup and shutdown of nuclear power plants in which it is difficult to sufficiently secure the experience data necessary for training a state prediction model.

Further, it is necessary to develop a technology that eliminates erroneous alarms that occur due to temporary transients occurring in a sensor even though devices and systems are operating normally. In addition, it is necessary to develop a technology for diagnosing the failure or drift of the sensor separately from the failure of the device.

Moreover, when the state of sensors, devices, and systems develops into a state that may cause a decrease in output of a turbine, an abrupt decrease in output of a nuclear reactor, abrupt stop of the nuclear reactor, and abrupt stop of the turbine, the development of an improved predictive diagnostic method capable of automatically diagnosing and alerting the state is required.

### [Disclosure]

### [Technical Problem]

An object of the present disclosure is to provide a method and system for monitoring a state of a nuclear power plant which is capable of reducing a state prediction error of a sensor during startup, full output, and stop operation of the nuclear power plant, and providing an early warning without erroneous alarm by diagnosing the states of the sensor, devices, systems and the power plant remotely and automatically.

### [Technical Solution]

An intelligent state monitoring system of a nuclear power plant according to the present disclosure includes: a first layer for detecting abnormal symptoms of a sensor and a device by comparing a measurement value of the sensor and a measurement value of the device with prediction values; a second layer for classifying a type of the sensor and diagnosing presence or absence of an abnormality of the sensor based on an abnormal symptom value of the sensor provided from the first layer; and a third layer for diagnosing a state of the nuclear power plant based on the detection and diagnosis results of the sensor provided from the first and second layers and the abnormal symptom results of the device provided from the first layer.

The intelligent state monitoring system of the nuclear power plant may further include a fourth layer for determining a level of early warning based on the state diagnosis result of the nuclear power plant provided from the third layer and calculating a soundness index for each layer of the nuclear power plant.

The first layer may include a state monitoring module for each sensor which calculates a sensor prediction value and detects an abnormal symptom of the sensor based on a difference between the sensor measurement value and the sensor prediction value, and a state monitoring module for each device which calculates a device prediction value based on the sensor prediction value and detects an abnormal symptom of the device based on a difference between the device measurement value and the device prediction value.

In the first layer, the state monitoring module for each sensor and the state monitoring module for each device may detect the abnormal symptoms of the sensor and the device while the device is in operation.

The second layer may include an overlapping sensor group state monitoring module for diagnosing at least one of failure and drift of the sensor when the sensor is an overlapping sensor, and a strongly correlated sensor group state monitoring module for diagnosing at least one of failure and drift of the sensor when the sensor is a strongly correlated sensor.

The third layer may include a sensor state diagnosis module for performing a state diagnosis of the sensor based on detection and diagnosis results of the sensor provided from the first and second layers and interpreting the state monitoring result of the sensor, a device state diagnosis module for performing a state diagnosis of the device based on the abnormal symptom result of the device provided from the first layer and interpreting the state monitoring result of the device, and a system state diagnosis module for performing a state diagnosis of a system based on the interpretation provided from the sensor state diagnosis module and the interpretation provided from the device state diagnosis module.

The sensor state diagnosis module may include a sensor abnormal symptom diagnosis inference engine that utilizes the sensor abnormal symptom results provided from the first and second layers as sensor state knowledge, compares the sensor state knowledge with a preset sensor state generation rule, and applies state knowledge selected by the comparison to a preset sensor state diagnosis rule set.

The sensor state diagnosis module may interpret the state monitoring result of the sensor by resolving competition according to a preset priority when a plurality of rule sets are selected by the sensor abnormal symptom diagnosis inference engine.

The device state diagnosis module may include a device abnormal symptom diagnostic inference engine that utilizes the device abnormal symptom result provided from the first layer as device state knowledge, compares the device state knowledge with a preset device state generation rule, and applies the state knowledge selected by the comparison to a preset sensor state diagnosis rule set.

The device state diagnosis module may interpret the state monitoring result of the device by resolving competition according to a preset priority when a plurality of rule sets are selected by the device abnormal symptom diagnosis inference engine.

The system state diagnosis module may perform system state diagnosis by applying the interpretation provided from the sensor state diagnosis module and the interpretation provided from the device state diagnosis module to a decision tree.

The fourth layer may include an early warning module that determines a level of early warning by applying the state diagnosis result of the nuclear power plant provided from the third layer to the decision tree, a power plant comprehensive diagnosis module that determines a soundness index for each layer of the nuclear power plant by calculating a soundness index weight of the nuclear power plant based on the early warning level, and a user interface module that enables early warning according to the early warning level provided from the early warning module.

The power plant comprehensive diagnosis module may calculate a soundness index for each layer according to layers set according to a classification system of the power plant based on the result values of the first to third layers.

The user interface module may generate a report by combining the soundness index for each layer calculated by the power plant comprehensive diagnosis module with a power plant operation status.

The nuclear power plant may include at least one of the sensor, the device, and a system of the nuclear power plant environment.

In the third layer, a rule-based expert system may be applied to diagnose the state of the nuclear power plant.

Meanwhile, an intelligent state monitoring method of a nuclear power plant according to the present disclosure includes: a step of detecting abnormal symptoms of a sensor and a device by comparing a sensor measurement value and a device measurement value with prediction values, a step of classifying a type of the sensor and diagnosing presence or absence of an abnormality of the sensor based on an abnormal symptom value of the sensor, and a step of diagnosing the state of the nuclear power plant based on the detection and diagnosis results of the sensor generated in the detecting and diagnosing steps and the abnormal symptom results of the device generated in the detecting step.

### [Advantageous Effects]

The method and system for monitoring the state of a nuclear power plant according to the present disclosure can improve the performance of the early warning system by automatically diagnosing the cause of the alarm occurring even when it is difficult to predict the state in the multi-layer state monitoring of the startup, full output, and stop operation of the nuclear power plant, and reduce the time required for monitoring and diagnosis of the state and maximize the use of computing resources.

The technical effects of the present disclosure as described above are not limited to the above-mentioned effects, and other technical effects not mentioned will be clearly understood by those skilled in the art from the following descriptions.

### [Description of Drawings]

FIGS. 1 and 2 are diagrams schematically showing a structure of an intelligent state monitoring system of a nuclear power plant according to the present embodiment.
FIG. 3 is a conceptual diagram showing a state monitoring model according to the present embodiment.
FIG. 4 is a conceptual diagram showing a first layer of the intelligent state monitoring system of the nuclear power plant according to the present embodiment.
FIG. 5 is a conceptual diagram showing a second layer of the intelligent state monitoring system of the nuclear power plant according to the present embodiment.
FIG. 6 is a conceptual diagram showing a third layer of the intelligent state monitoring system of the nuclear power plant according to the present embodiment.
FIG. 7 is a conceptual diagram illustrating a fourth layer of the intelligent state monitoring system of the nuclear power plant according to the present embodiment.

### [Mode for Disclosure]

Hereinafter, embodiments of the present disclosure will be described in detail with reference to the accompanying drawings. However, the present embodiment is not limited to the embodiment disclosed below, but may be implemented in various forms, and the present embodiment is only provided to fully disclose the present disclosure, and to completely inform those of ordinary skill in the art of the scope of the present disclosure. The shapes of elements in the drawings may be exaggerated for more clear explanation, and elements indicated by the same reference numerals in the drawings are the same.

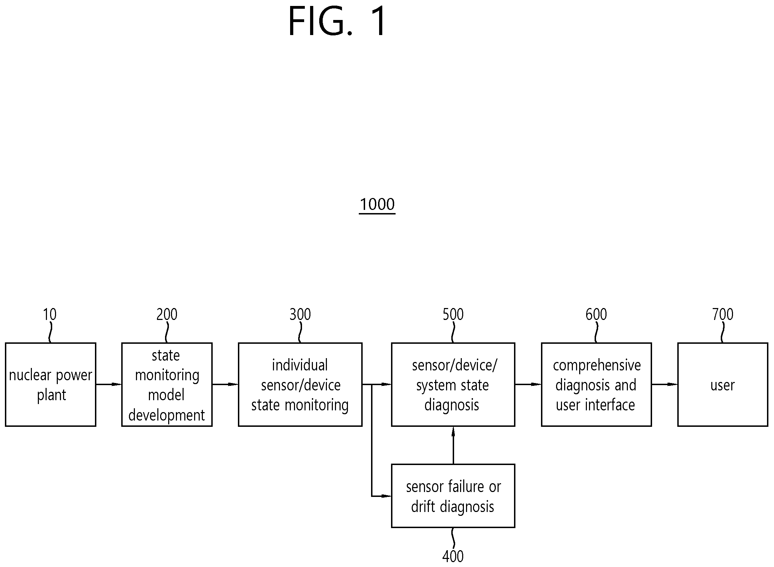

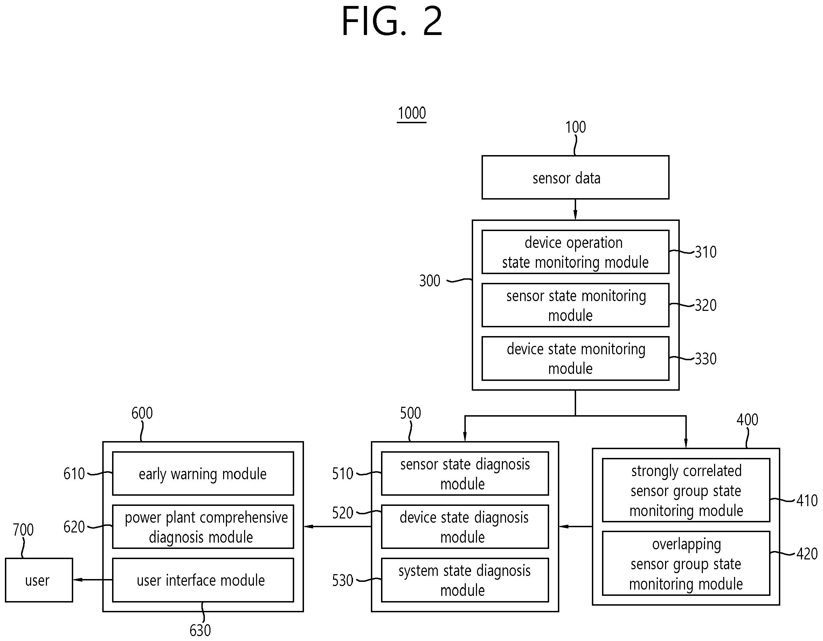

FIGS. 1 and 2 are diagrams schematically showing a structure of an intelligent state monitoring system of a nuclear power plant according to the present embodiment.

As shown in FIGS. 1 and 2, an intelligent state monitoring system 1000 (hereinafter, referred to as "state monitoring system") of a nuclear power plant according to the present embodiment monitors a state of the nuclear power plant based on a first layer 300 that monitors abnormal symptoms occurring in individual sensors and devices installed in the nuclear power plant 10, a second layer 400 that diagnoses whether the cause of the abnormal symptom of the sensor monitored by the first layer 300 is a failure or drift of the sensor, a third layer 500 that diagnoses the state monitoring results of the first layer 300 and the second layer 400 through a rule-based expert system and a decision tree to determine operation variable of the sensor, and the presence or absence of abnormality in the devices and systems, and a fourth layer 600 that comprehensively diagnoses the state monitoring and diagnosis results of the third layer 500 through the decision tree and the analysis of deterministic conclusions. Here, each layer may mean a systemic layer for performing a corresponding function.

Accordingly, as compared to a conventional early warning system, the state monitoring system 1000 can minimize the occurrence of an erroneous alarm in the state monitoring of the nuclear power plant upon the startup and stop operation of the nuclear power plant 10 in which the state changes of operating variables are severe, and analyze the cause of the alarm and provide it to a user 700.

Meanwhile, the characteristics and configuration of the layers for multi-layer state monitoring will be described below. Each layer may be provided to include a module that performs a preset operation, but this is for explaining the present embodiment, and the entire operation of the four layers to be described below may be performed in a single or a plurality of computer environment.

First, the first layer 300 monitors states of sensors and devices with one model per each sensor and each device, and calculates a state prediction value. Further, when an abnormality out of a normal range occurs by comparing the state prediction value with the measured value, the first layer 300 transmits it to the second layer 400 and the third layer 500. Here, the first layer 300 includes a device operation state monitoring module 310 for monitoring the operating state of the device, a sensor state monitoring module 320 for monitoring the state of the sensor based on the device operating state, and a device state monitoring module 330 for performing state monitoring of the device.

In addition, the second layer 400 analyzes a strongly correlated sensor group or a overlapping sensor group to which the sensor having the abnormal symptom belongs to diagnose whether a failure or drift has occurred. Then, the diagnosis value is transmitted to the third layer 500. Here, the second layer 400 may include a strongly correlated sensor group state monitoring module 410 that performs state monitoring of the strongly correlated sensor group and an overlapping sensor group state monitoring module 420 that performs state monitoring of the overlapping sensor group. The strongly correlated sensor means a sensor group having a physical causal relationship, and may mean, for example, a set of pump discharge pressure and flow sensors, and a set of flow sensors and inlet/outlet temperature sensors in high temperature and low temperature parts of a heat exchanger. In addition, the overlapping sensor means sensors of the same specification that measure the same variable at the same point, and may include, for example, safety-related or safety-important sensors such as a narrow range pressure sensor for pressurization of the nuclear power plant, and the number of rotations of a coolant pump. Further, the single sensor may mean all sensors that do not belong to the strongly correlated sensor group and the overlapping sensor group.

The third layer 500 analyzes the abnormal symptoms of the sensor and the device transmitted from the first layer 300 and the diagnostic result provided from the second layer 400 through a rule-based expert system to determine whether the sensor and the device are abnormal or not. In this case, the third layer 500 diagnoses the state of the layer based on the states of the sensor and the device and performs the determination. The third layer 500 may include a sensor state diagnosis module 510 for determining whether a sensor is abnormal or not, a device state diagnosis module 520 for determining whether a device is abnormal or not, and a system state diagnosis module 530 for determining whether a system is abnormal or not based on the states of the sensor and the device.

Finally, the fourth layer 600 enables early warning based on the presence or absence of abnormalities in the sensor, device, and system transmitted from the third layer 500. In addition, the fourth layer 600 enables a comprehensive diagnosis of the nuclear power plant 10 based on the diagnosis result provided from the third layer 500 and the diagnosis results provided from the first layer 300 and the second layer 400. The fourth layer 600 may include an early warning module 610 for performing early warning, a power plant comprehensive diagnosis module 620 for performing a comprehensive diagnosis of the nuclear power plant 10, and a user interface module 630 for providing an interface to a user.

Hereinafter, the application of the four layers from the development of the state monitoring model will be described in detail. However, detailed descriptions of the above-described components will be omitted and the same reference numerals will be assigned to them.

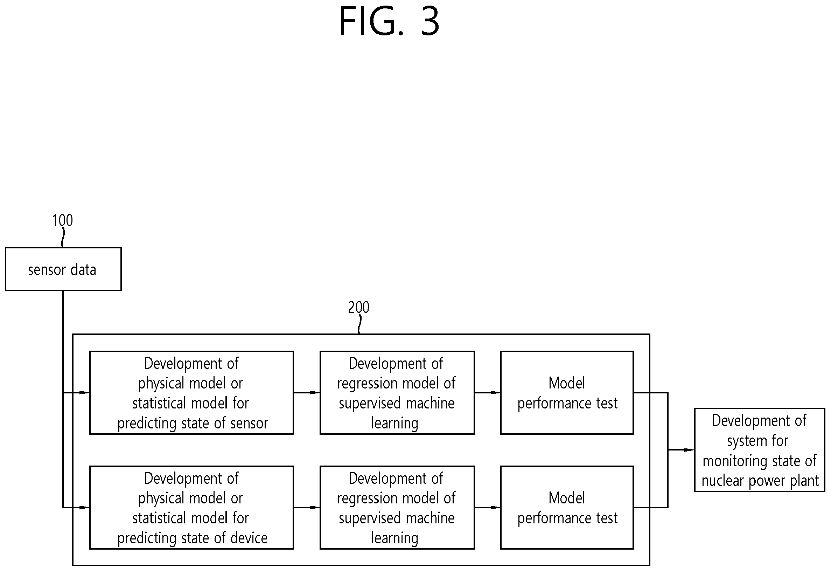

FIG. 3 is a conceptual diagram showing a state monitoring model according to the present embodiment.

As shown in FIG. 3, the state monitoring model 200 is applied to the state monitoring system 1000 according to the present embodiment.

In the development of the state monitoring model 200, a physical model or a statistical model for predicting states of a sensor and a device is developed, and this is trained as a regression model of supervised machine learning. Then, a state prediction algorithm is developed through a model performance test and reflected in an operation procedure of the state monitoring system 1000.

Accordingly, based on the physical model and the statistical model, the state monitoring model 200 may reduce a state prediction error of the sensor during the startup and stop operation of the nuclear power plant 10 in which experience data is insufficient and change in state of the operation variable is severe.

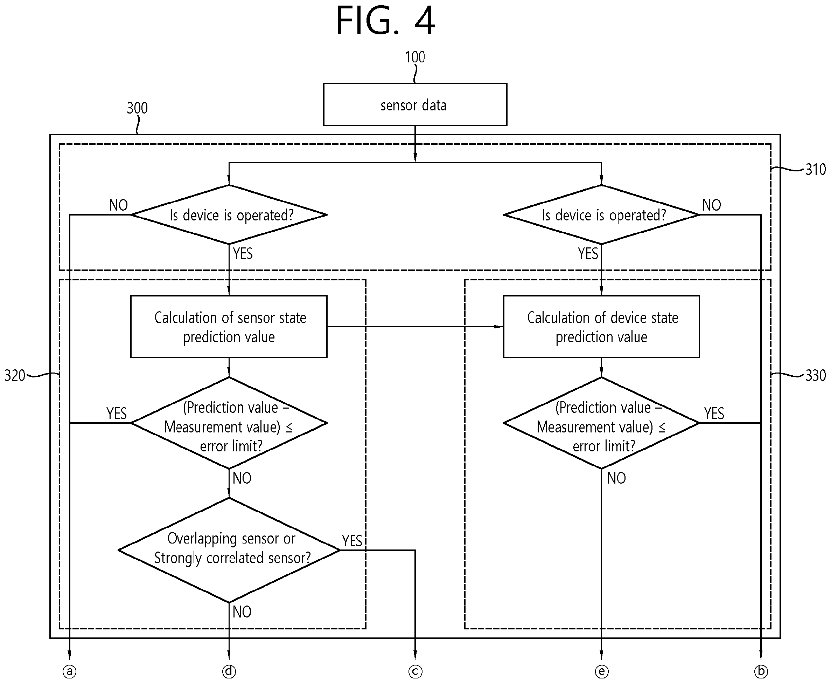

FIG. 4 is a conceptual diagram showing the first layer of the intelligent state monitoring system of the nuclear power plant according to the present embodiment.

As shown in FIG. 4, in the first layer 300 of the state monitoring system 1000 according to the present embodiment, information is provided from the sensor data 100. Here, the sensor data 100 may include experience data used for model development and real-time operation data monitored by a state monitoring system, e.g., a sensor measurement value. The experience data uses sensor measurements included in the past operation data of the nuclear power plant, and the real-time sensor measurements may be obtained through a communication protocol of an HMI server in a comprehensive situation room of the nuclear power plant. At this time, since the sensor measurements are loss-compressed, the sensor measurements may be restored according to the rules and used as the real-time measurements at discrete intervals. In addition, device measurements are calculated based on the sensor measurements, and for example, pump efficiency, which is one of the device measurements, may be calculated based on pressure and flow rate of a pump discharge part, and real-time current values applied to a pump motor and rated voltage.

Accordingly, when monitoring whether the device is in operation or not and the device is not in operation, the first system 300 does not monitor the state of the related devices and sensors. At this time, the sensor measurement value and the device measurement value are transmitted to the fourth system 600.

Here, the device may be any machine or air conditioning device having a device number in the nuclear power plant, and may be a device that can improve the safety and economic efficiency of operation of the nuclear power plant by predicting and diagnosing the state of the device. Such a device may include a sensor provided to the device itself that can predict the state of the device, or may be provided with a sensor for measuring processes of the device.

Accordingly, the sensor measurement value described in the present embodiment may mean a value acquired from a sensor provided in the device of the nuclear power plant, and the device measurement value may mean a value acquired from the device. In addition, the sensor of the device itself may be a pump vibration sensor, a pump bearing temperature sensor, a pump motor bearing temperature sensor, a pump motor stator temperature sensor, and the like. Further, the sensor for measuring the processor may include a pressure and flow rate sensor for the pump discharge part, and an inlet/outlet temperature sensor and a flow rate sensor for high-temperature and low-temperature parts of a heat exchanger, but the present disclosure is not limited thereto.

Meanwhile, when the operation of the device is confirmed by the device operation state monitoring module 310, the measurement value of the sensor is provided to the sensor state monitoring module 320. The sensor state monitoring module 320 calculates a state prediction value for the sensor. Further, by comparing the calculated prediction value with the sensor measurement value provided from the outside, it is determined that abnormal symptoms have occurred when the difference therebetween falls outside a normal range. In addition, the sensor state monitoring module 320 transmits the abnormal symptom value of the sensor to the second layer 400 and the third layer 500. In this case, the sensor for transmitting the abnormal symptoms to the second layer 400 is an overlapping sensor or a strongly correlated sensor, and the abnormal symptoms generated by other sensors may be transmitted to the third layer 500.

In addition, when the operation of the device is confirmed by the device operation state monitoring module 310, the device measurement value is provided to the device state monitoring module 330. The device state monitoring module 330 calculates a state prediction value for the device based on the state prediction value for the sensor. Further, by comparing the calculated prediction value with the device measurement value provided from the outside, it is determined that abnormal symptoms have occurred when the difference therebetween falls outside the normal range. Further, the device state monitoring module 330 transmits an abnormal symptom value of the device to the third layer 500.

In addition, when it is confirmed that the device is not operated by the device operation state monitoring module 310, a list of devices that are not operated in the device operation state monitoring module 310 and a list of sensors that are not required to monitor may be transmitted to the fourth layer 600. In this case, the list of the sensors that are not required to monitor may be transmitted to a soundness index calculation process 622 for each layer of the fourth layer 600, and the state of the sensor and the device in which no abnormal symptoms occur in the sensor state monitoring module 320 and the device state monitoring module 330 may also be transmitted to the soundness index calculation process 622 for each layer of the fourth layer 600.

Meanwhile, in the comparison between each of the sensor measurement values and each of the device measurement values, an error limit may be set to three times a standard deviation of the difference between experimental prediction values and measurement values of the sensors and the devices.

Meanwhile, the second layer 400 diagnoses the failure or drift of the sensor based on the abnormal symptom value of the sensor provided from the first layer 300.

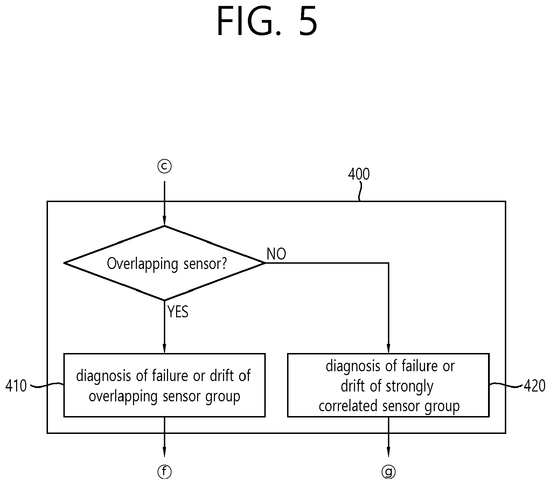

FIG. 5 is a conceptual diagram showing a second layer of the intelligent state monitoring system of the nuclear power plant according to the present embodiment.

As shown in FIG. 5, in the second layer 400 of the state monitoring system 1000 according to the present embodiment, it is determined whether the sensor in which an abnormal symptom occurs in the first layer 300 is an overlapping sensor.

Here, when the sensor in which the abnormal symptom occurs is an overlapping sensor, the overlapping sensor group state monitoring module 420 diagnoses the failure or drift of the sensor. Further, the overlapping sensor group state monitoring module 420 provides a diagnosis result for abnormality of the overlapping sensor to the third layer 500.

In addition, when the sensor in which the abnormal symptom occurs is not an overlapping sensor, the strongly correlated sensor group state monitoring module 410 diagnoses the failure or drift of the sensor. Further, the strongly correlated sensor group state monitoring module 410 provides the diagnosis result for abnormality of the strongly correlated sensor to the third layer 500.

Meanwhile, in the third layer 500, an abnormal symptom value of the sensor transmitted from the first layer 300, that is, the sensor and the device in which abnormal symptom occurs, are reflected to the sensor abnormality diagnosis result of the second layer 400 and diagnosed with a rule-based expert system.

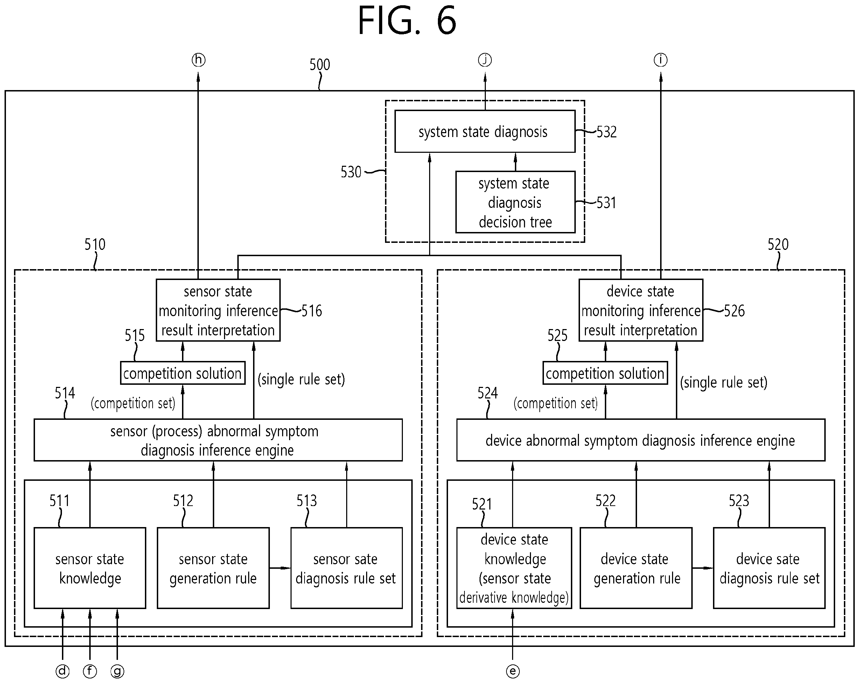

FIG. 6 is a conceptual diagram showing the third layer of the intelligent state monitoring system of the nuclear power plant according to the present embodiment.

As shown in FIG. 6, in the third layer 500 of the state monitoring system 1000 according to the present embodiment, abnormal symptoms of a sensor and a device transmitted from the first layer 300 and a diagnosis result provided from the second layer 400 are analyzed by the rule-based expert system to determine abnormalities of the sensor and the device.

First, the sensor state diagnosis module 510 is provided with an abnormal symptom value of a sensor of the first layer 300 and an abnormal status diagnosis result of a sensor of the second layer 400 as sensor state knowledge 511. Accordingly, the sensor state diagnosis module 510 compares the sensor state knowledge 511 with the sensor state generation rule 512 illustrated in Table 1 below.

**[Table 1]**

| Class | State code | Contents |
|---|---|---|
| Sensor state monitoring rule | A | Difference between prediction value and measurement value of pump outlet pressure is within ±3σ |
| | B | Difference between prediction value and measurement value of the efficiency calculated as pump pressure is within ±3σ |
| | C | Difference between prediction value and measurement value of the efficiency calculated as pump flow rate is within ±3σ |
| | D | Difference between prediction value and measurement value of pump outlet pressure in 2 hours immediately after current time is within ±3σ |
| | E | Difference between prediction value and measurement value of pump outlet pressure in 10 hours immediately after current time is within ±3σ |
| | F | Difference between prediction value and measurement value of pump outlet pressure in 10 hours immediately before current time is ±3σ once or more |
| | G | more than 1 ts among the previous 8 ts are B |
| Operation rule | H | Pump outlet pressure is higher than maximum value of operation experience. |
| | I | Pump outlet pressure is lower than minimum value of operation experience. |
| | J | Pump outlet pressure is close to abnormal operation value. |
| | K | Measurement value of pump outlet pressure is close to alarm set point. |

In addition, the sensor state diagnosis module 510 may compare the sensor state knowledge 511 and the sensor state generation rule 512 to select a matching state as shown in Table 2 in a sensor abnormal symptom diagnosis inference engine 514.

**[Table 2]**

| Time (Cumulative seconds) | Tag number | Generation rule matching state knowledge | | | | | | | | |
|---|---|---|---|---|---|---|---|---|---|---|
| | | Number | Generation rule | | | | | | | |
| 90377430 | CD-PT0139 | 8 | A | B | C | D | E | H | I | J |
| 90377610 | CC-FY0049C02 | 8 | A | B | C | D | E | H | I | J |
| 90379170 | CD-PT0139 | 8 | A | B | C | D | E | H | I | J |
| 90382830 | CD-FT0135N02-ACO | 7 | A | C | D | E | H | I | J | - |
| 90382830 | CD-PT0139 | 6 | B | D | E | H | I | J | - | - |
| 90384510 | CD-PT0139 | 6 | B | D | E | H | I | J | - | - |
| 90387210 | CD-PT0139 | 8 | A | B | C | D | E | H | I | J |
| 90387750 | CD-PT0139 | 7 | A | B | C | D | H | I | J | - |
| 90388170 | CD-PT0139 | 7 | A | B | C | D | H | I | J | - |
| 90388950 | CD-PT0139 | 8 | A | B | C | D | E | H | I | J |
| 90392190 | CD-PT0139 | 7 | B | C | D | E | H | I | J | - |
| 90392370 | CD-FT0135N02-ACO | 7 | A | C | D | E | H | I | J | - |
| 90392370 | CD-PT0139 | 5 | B | D | H | I | J | - | - | - |
| 90392790 | CD-PT0139 | 8 | A | B | C | D | F | H | I | J |

Further, the sensor state diagnosis module 510 selects a rule set according to the sensor state knowledge 511 as exemplified in the following Table 4 using the sensor abnormal symptom diagnosis inference engine 514 in which a sate diagnosis rule set (Then) satisfies a condition (If) of a sensor sate diagnosis rule set 513 exemplified in the following Table 3 as the generation rule matching with the state knowledge selected in the sensor abnormal symptom diagnosis inference engine 514..

**[Table 3]**

| If | Then | Ranking |
|---|---|---|
| ABDE | Temporary transients occurring in sensor | 10 |
| ABCD | Temporary transients occurring in sensor | 9 |
| CFFH | Observation is necessary as it may progress to drift or failure of sensor | 8 |
| BGGH | Continuous observation is necessary as drift or failure of sensor is suspected | 7 |
| GGGH | Continuous observation is necessary as minor damage to pump impeller is possible | 6 |
| ABDH | On-site inspection is required as minor damage to pump impeller is suspected | 5 |
| ABCI | Need to check for drift or failure of sensor | 4 |
| ABCJ | Need to establish a maintenance plan for sensor | 3 |
| DEEH | On-site inspection is required as damage to pump impeller is possible | 1 |
| FFHH | Occurrence of Sensor damage or drift | 2 |

**[Table 4]**

| Time (Cumulative seconds) | Tag number | Sensor state matching with state knowledge | | | | | | |
|---|---|---|---|---|---|---|---|---|
| | | Number | Rule set | | | | | |
| 90379170 | 2811-CD-PT0139 | 6 | ABDE | ABCD | ABDH | ABCI | ABCJ | DEEH |
| 90382830 | 2811-CD-FT0135N02-ACO | 1 | DEEH | - | - | - | - | - |
| 90382830 | 2811-CD-PT0139 | 1 | DEEH | - | - | - | - | - |
| 90384510 | 2811-CD-PT0139 | 1 | DEEH | - | - | - | - | - |
| 90387210 | 2811-CD-PT0139 | 6 | ABDE | ABCD | ABDH | ABCI | ABCJ | DEEH |
| 90387750 | 2811-CD-PT0139 | 4 | ABCD | ABDH | ABCI | ABCJ | - | - |
| 90388170 | 2811-CD-PT0139 | 4 | ABCD | ABDH | ABCI | ABCJ | - | - |
| 90388950 | 2811-CD-PT0139 | 6 | ABDE | ABCD | ABDH | ABCI | ABCJ | DEEH |
| 90392190 | 2811-CD-PT0139 | 1 | DEEH | - | - | - | - | - |
| 90392370 | 2811-CD-FT0135N02-ACO | 1 | DEEH | - | - | - | - | - |
| 90392370 | 2811-CD-PT0139 | 0 | No Mps | - | - | - | - | - |
| 90392790 | 2811-CD-PT0139 | 6 | ABCD | CFFH | ABDH | ABCI | ABCJ | FFHH |

In addition, the sensor state diagnosis module 510 solves the competition by applying the priority of Table 3 in the case of the competition set illustrated in Table 4 since there are two or more selected rule sets (515). Accordingly, the sensor state diagnosis module 510 selects a single rule set, and interprets the result of the sensor state monitoring inference as shown in Table 5 using the state diagnosis rule sets 513 (Then) illustrated in Table 3 (516), and they are provided to the fourth layer 600 and the system state diagnosis module 530. Here, the sensor state diagnosis module 510 allows the inference result interpretation 516 to be performed without going through the competition solution 515 when the result inferred by the sensor abnormal symptom diagnosis inference engine 514 is a single rule set.

**[Table 5]**

| Time (Cumulative seconds) | Tag number | Selected rule set | Interpretation |
|---|---|---|---|
| 90379170 | 2811-CD-PT0139 | ABDE | Temporary transients occurring in sensor |
| 90382830 | 2811-CD-FT0135N02-ACO | DEEH | On-site inspection is required as damage to pump impeller is possible |
| 90382830 | 2811-CD-PT0139 | DEEH | On-site inspection is required as damage to pump impeller is possible |
| 90384510 | 2811-CD-PT0139 | DEEH | On-site inspection is required as damage to pump impeller is possible |
| 90387210 | 2811-CD-PT0139 | ABDE | Temporary transients occurring in sensor |
| 90387750 | 2811-CD-PT0139 | ABCD | Temporary transients occurring in sensor |
| 90388170 | 2811-CD-PT0139 | ABCD | Temporary transients occurring in sensor |
| 90388950 | 2811-CD-PT0139 | ABDE | Temporary transients occurring in sensor |
| 90392190 | 2811-CD-PT0139 | DEEH | On-site inspection is required as damage to pump impeller is possible |
| 90392370 | 2811-CD-FT0135N02-ACO | DEEH | On-site inspection is required as damage to pump impeller is possible |
| 90392370 | 2811-CD-PT0139 | No Mps | No matching generation rule (needs to be supplemented) |
| 90392790 | 2811-CD-PT0139 | ABCD | Temporary transients occurring in sensor |
| 90392910 | 2811-CD-PT0139 | CFFH | Observation is necessary as it may progress to drift or failure of sensor |
| 90393030 | 2811-CD-PT0139 | CFFH | Observation is necessary as it may progress to drift or failure of sensor |

Meanwhile, in the device state diagnosis module 520, an abnormal symptom value of the device transmitted from the first layer 300 is provided as the device state knowledge 521. In this case, the abnormal symptom value of the device may be knowledge derived from the sensor in calculating the prediction value of the first layer 300. The device state diagnosis module 520 may propagate the inference result in the same manner as the sensor state diagnosis module 510 described above.

For example, the device state diagnosis module 520 compares the device state knowledge 521 with a device state generation rule 522. In addition, the device state diagnosis module 520 may select a matching state in the device abnormality diagnosis inference engine 524 by comparing the device state knowledge 521 and the device state generation rule 522.

In this case, the device state diagnosis module 520 selects a rule set according to device state knowledge 521 using the device state diagnosis inference engine 514 in which a state diagnosis rule set (Then) satisfies a condition (If) of the device state diagnosis rule set 523.

Then, in case of a competition rule set in which the selected rule sets are two or more, the device state diagnosis module 520 resolves the contention by applying a priority (525). Accordingly, the device state diagnosis module 520 selects a single rule set, and interprets the device state monitoring inference result with the state diagnosis rule set 523 (Then) (526). Further, the interpretation is provided to the fourth layer 600 and the system state diagnosis module 530. In this case, when the result inferred by the device abnormal symptom diagnosis inference engine 524 is a single rule set, the device condition diagnosis module 520 may perform the inference result interpretation 526 without going through competition.

Meanwhile, the system state diagnosis module 530 diagnoses the system state by applying the sensor state monitoring inference result interpretation and the device state monitoring inference result interpretation to a system state diagnosis decision tree 531 (532). Then, the system state diagnosis result is transferred to the fourth layer 600.

Meanwhile, in the fourth layer 600, the results of the first layer 300 to the third layer 500 are comprehensively diagnosed, and the results are delivered to the user.

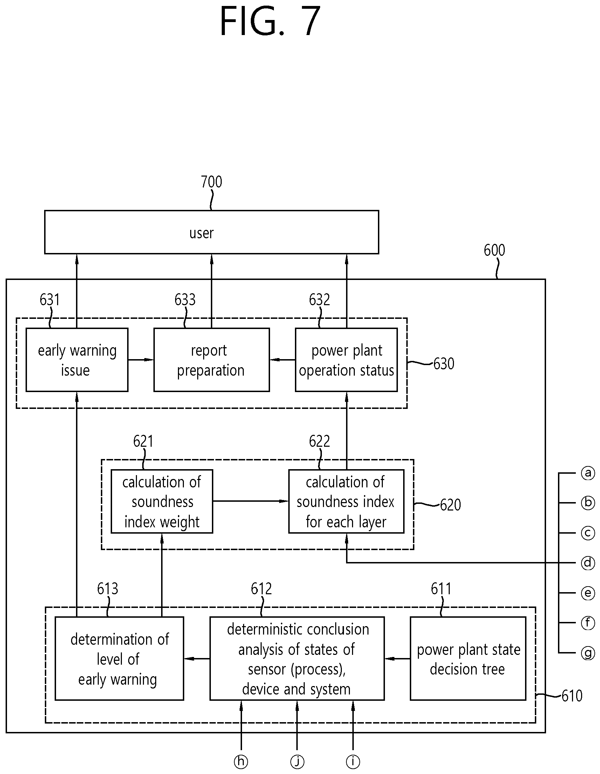

FIG. 7 is a conceptual diagram illustrating the fourth layer of the intelligent state monitoring system of the nuclear power plant according to the present embodiment.

As shown in FIG. 7, in the fourth layer 600 according to the present embodiment, the early warning module 610 analyzes the deterministic conclusion by reflecting the states of sensors, devices, and systems according to the power plant state decision tree 611 that determines the state of the nuclear power plant 10 depending on the operation variables of the sensors, and the states of the devices and the systems (612), and then, determines the level of early warning according to the deterministic conclusion (613). Here, the early warning module 610 uses the analysis results provided from the sensor state diagnosis module 510, the device state diagnosis module 520, and the system state diagnosis module 530. In addition, the early warning module 610 provides the determined level of early warning to the power plant comprehensive diagnosis module 620 and the user interface module 630.

Meanwhile, the power plant comprehensive diagnosis module 620 calculates soundness index weights of the sensors, the devices, and the systems by reflecting the determined level of early warning issuance (621), and then, calculates the soundness index for each layer by weighting the state monitoring results of the first layer 300 to the third layer 500 (622).

Further, the user interface module 630 makes it possible to issue an early warning according to the level of the early warning provided from the early warning module 610 (631). In addition, a final report 633 may be prepared by combining the soundness index for each layer calculated by the power plant comprehensive diagnosis module 620 with the power plant operation status 632. The final report 633 may be provided as a UI screen and a PDF report. In this case, the diagnosis result may be output in the form of a graph on the UI screen, and the PDF report may be prepared in the form of an instantaneous abnormal state report, a daily report, a weekly report, and a monthly report.

As described above, the method and system for monitoring the state of a nuclear power plant according to the present disclosure can improve the performance of the early warning system by automatically diagnosing the cause when an alarm occurs even when it is difficult to predict the state in the multi-layer state monitoring of startup, full output, and stop operation, and can shorten the time required for state monitoring and diagnosis and maximize the use of computing resources.

The embodiment of the present disclosure described above and shown in the drawings should not be construed as limiting the technical spirit of the present disclosure. The protection scope of the present disclosure is limited only by the matters described in the claims, and those of ordinary skill in the art may improve and modify the technical idea of the present disclosure in various forms. Accordingly, such improvements and modifications will fall within the protection scope of the present disclosure as long as it is apparent to those of ordinary skill in the art.

## Claims

1. An intelligent state monitoring system of a nuclear power plant, comprising:
a first layer for detecting abnormal symptoms of a sensor and a device by comparing a measurement value of the sensor and a measurement value of the device with prediction values;
a second layer for classifying a type of the sensor and diagnosing presence or absence of an abnormality of the sensor based on an abnormal symptom value of the sensor provided from the first layer; and
a third layer for diagnosing a state of the nuclear power plant based on the detection and diagnosis results of the sensor provided from the first and second layers and the abnormal symptom results of the device provided from the first layer.

2. The intelligent state monitoring system of claim 1, further comprising:
a fourth layer for determining a level of early warning based on the state diagnosis result of the nuclear power plant provided from the third layer and calculating a soundness index for each layer of the nuclear power plant.

3. The intelligent state monitoring system of claim 1, wherein the first layer includes:
a state monitoring module for each sensor which calculates a sensor prediction value and detects an abnormal symptom of the sensor based on a difference between the sensor measurement value and the sensor prediction value; and
a state monitoring module for each device which calculates a device prediction value based on the sensor prediction value and detects an abnormal symptom of the device based on a difference between the device measurement value and the device prediction value.

4. The intelligent state monitoring system of claim 3, wherein in the first layer, the state monitoring module for each sensor and the state monitoring module for each device detect the abnormal symptoms of the sensor and the device while the device is in operation.

5. The intelligent state monitoring system of claim 2, wherein the second layer includes:
an overlapping sensor group state monitoring module for diagnosing at least one of failure and drift of the sensor when the sensor is an overlapping sensor; and
a strongly correlated sensor group state monitoring module for diagnosing at least one of failure and drift of the sensor when the sensor is a strongly correlated sensor.

6. The intelligent state monitoring system of claim 2, wherein the third layer includes:
a sensor state diagnosis module for performing a state diagnosis of the sensor based on the detection and diagnosis results of the sensor provided from the first and second layers and interpreting the state monitoring result of the sensor;
a device state diagnosis module for performing a state diagnosis of the device based on the abnormal symptom result of the device provided from the first layer and interpreting the state monitoring result of the device; and
a system state diagnosis module for performing a state diagnosis of a system based on the interpretation provided from the sensor state diagnosis module and the interpretation provided from the device state diagnosis module, and wherein
the second layer include an overlapping sensor group state monitoring module for diagnosing at least one of failure and drift of the sensor when the sensor is an overlapping sensor, and a strongly correlated sensor group state monitoring module for diagnosing at least one of failure and drift of the sensor when the sensor is a strongly correlated sensor.

7. The intelligent state monitoring system of claim 6, wherein the sensor state diagnosis module includes a sensor abnormal symptom diagnosis inference engine that utilizes the sensor abnormal symptom results provided from the first and second layers as sensor state knowledge, compares the sensor state knowledge with a preset sensor state generation rule, and applies state knowledge selected by the comparison to a preset sensor state diagnosis rule set.

8. The intelligent state monitoring system of claim 7, wherein the sensor state diagnosis module interprets the state monitoring result of the sensor by resolving competition according to a preset priority when a plurality of rule sets are selected by the sensor abnormal symptom diagnosis inference engine.

9. The intelligent state monitoring system of claim 6, wherein the device state diagnosis module includes a device abnormal symptom diagnostic inference engine that utilizes the device abnormal symptom result provided from the first layer as device state knowledge, compares the device state knowledge with a preset device state generation rule, and applies the state knowledge selected by the comparison to a preset sensor state diagnosis rule set.

10. The intelligent state monitoring system of claim 9, wherein the device state diagnosis module interprets the state monitoring result of the device by resolving competition according to a preset priority when a plurality of rule sets are selected by the device abnormal symptom diagnosis inference engine.

11. The intelligent state monitoring system of claim 6, wherein the system state diagnosis module performs system state diagnosis by applying the interpretation provided from the sensor state diagnosis module and the interpretation provided from the device state diagnosis module to a decision tree.

12. The intelligent state monitoring system of claim 2, wherein the fourth layer includes:
an early warning module that determines a level of early warning by applying the state diagnosis result of the nuclear power plant provided from the third layer to the decision tree;
a power plant comprehensive diagnosis module that determines a soundness index for each layer of the nuclear power plant by calculating a soundness index weight of the nuclear power plant based on the early warning level; and
a user interface module that enables early warning according to the early warning level provided from the early warning module.

13. The intelligent state monitoring system of claim 12, wherein the power plant comprehensive diagnosis module calculates a soundness index for each layer according to layers set according to a classification system of the power plant based on the result values of the first to third layers.

14. The intelligent state monitoring system of claim 12, wherein the user interface module generates a report by combining the soundness index for each layer calculated by the power plant comprehensive diagnosis module with a power plant operation status.

15. The intelligent state monitoring system of claim 1, wherein the nuclear power plant includes at least one of the sensor, the device, and the system of the nuclear power plant environment.

16. The intelligent state monitoring system of claim 1, wherein in the third layer, a rule-based expert system is applied to diagnose the state of the nuclear power plant.

17. An intelligent state monitoring method in a nuclear power plant, comprising:
a step of detecting abnormal symptoms of a sensor and a device by comparing a sensor measurement value and a device measurement value with prediction values;
a step of classifying a type of the sensor and diagnosing presence or absence of an abnormality of the sensor based on an abnormal symptom value of the sensor; and
a step of diagnosing the state of the nuclear power plant based on the detection and diagnosis results of the sensor generated in the detecting and diagnosing steps and the abnormal symptom results of the device generated in the detecting step.
